# EUROPEAN PATENT SPECIFICATION

(11) **EP 3 077 404 B1**
(45) Date of publication and mention of the grant of the patent: **07.10.2020**
(21) Application number: 15705378.6
(22) Date of filing: 13.01.2015
(51) Int. Cl.: C07F 9/6561

(54) **PURIFICATION OF TENOFOVIR ALAFENAMIDE AND ITS INTERMEDIATES**
REINIGUNG VON TENOFOVIRALAFENAMID UND DESSEN ZWISCHENPRODUKTEN
PURIFICATION DE TÉNOFOVIR ALAFÉNAMIDE ET DE SES INTERMÉDIAIRES

(30) Priority: 14.01.2014 IN 118MU2014
(43) Date of publication of application: 12.10.2016
(73) Proprietor: Mylan Laboratories Ltd., Panvel, Maharashtra 410208 (IN)
(72) Inventor: VELLANKI, Siva Ram Prasad, Maharashtra 410208 (IN); BALUSU, Raja Babu, Maharashtra 410208 (IN); PUTTA, Subba Rayudu, Maharashtra 410208 (IN); RAAVI, Mastan Rao, Maharashtra 410208 (IN); ARIKATLA, Sivalakshmi Devi, Maharashtra 410208 (IN)
(74) Representative: FRKelly
(86) International application number: PCT/IB2015/050239
(87) International publication number: WO 2015/107451

(56) References cited:
- WO-A1-2013/115916
- WO-A1-2014/195724
- CN-A- 101 712 692
- US-A- 5 798 340
- US-A1- 2013 090 473
- US-B2- 7 390 791
- US-B2- 7 803 788
- Josina Wilhelmina Nieuwenhuijzen: "Chapter 2 Resolutions via diastereomeric salt formation", Resolutions with families of resolving agents : principles and practice, 1 January 2002 (2002-01-01), pages 23-46, XP055177423, Retrieved from the Internet: URL:http://dissertations.ub.rug.nl/FILES/f aculties/science/2002/j.w.nieuwenhuijzen/c 2.pdf [retrieved on 2015-03-18]

## Description

### FIELD OF THE INVENTION

The present disclosure relates to an improved process for the preparation of tenofovir alafenamide and its intermediates.

### BACKGROUND OF THE INVENTION

Tenofovir alafenamide is chemically known as 9-{(R)-2-[((S)-{[(S)-1-(isopropoxycarbonyl) ethyl]amino} phenoxyphosphinyl)methoxy]propyl}adenine. Tenofovir alafenamide has the structure shown in Formula-I and is a prodrug of tenofovir, a phosphonate nucleotide analogue.

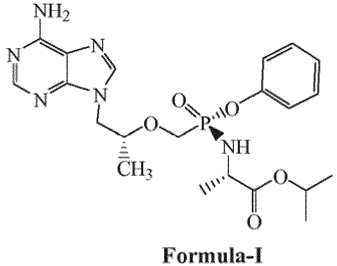

U.S. Patent No. 7,390,791 discloses prodrugs of phosphonate nucleotide analogues, including tenofovir alafenamide, as well as methods for diastereomeric separation resulting in tenofovir alafenamide API.

PCT Application No. WO2013052094 also discloses crystallization techniques for the diastereomeric separation of 9-{(R)-2-[((R,S)-{[(S)-1-(isopropoxycarbonyl)ethyl]amino}phenoxyphosphinyl)methoxy]propyl}adenine to give tenofovir alafenamide.

WO2013115916 discloses the use of {9-[(R)-2-[[(S)-[[(S)-1-(isopropoxycarbonyl)ethyl] amino]phenoxyphosphinyl]-methoxy]propyl]adenine } and the hemifumarate form (tenofovir alafenamide hemifumarate) in combination with cobicistat. In addition, the combination of tenofovir alafenamide hemifumarate, cobicistat, emtricitabine, and elvitegravir is disclosed.

Chapter 2 of Josina Wilhelmina Nieuwenhuijzen's thesis discloses resolutions via diastereomeric salt formation, resolutions with families of resolving agents : principles and practice, (20020101), pages 23 - 46, URL: http://dissertations.ub.rug.nl/FILES/faculties/science/2002/j.w.nieuwenhuijzen/c2.pdf.

CN101712692 relates to addition salt compounds of medical acid of tenofovir disoproxil fumarate, a preparation method thereof and application thereof in medicaments. The preparation method comprises the following steps: contacting the tenofovir disoproxil fumarate with the acid in a solvent; and crystallizing and refining the formed salt to obtain the acid addition salt of the tenofovir disoproxil fumarate. Compared with the tenofovir disoproxil fumarate, the addition salt compounds of the medical acid of the tenofovir disoproxil fumarate have good water solubility and stability and are favorable for preparing medicinal preparations and improving quality.

There is a long-standing need in the art for commercially viable procedures for the diastereomeric separation of 9-{(R)-2-[((R,S)-{[(S)-1-(isopropoxycarbonyl)ethyl]amino} phenoxyphosphinyl) methoxy] propyl}adenine to give tenofovir alafenamide. The present invention thus provides novel process for enantiomeric separation of 9-{(R)-2-[((R,S)-{[(S)-1-(isopropoxycarbonyl)ethyl]amino} phenoxyphosphinyl) methoxy] propyl}adenine.

### SUMMARY OF THE INVENTION

One aspect of the present disclosure provides a process for the purification of Formula-IV, which may exist as a mixture of enantiomers, to give tenofovir alafenamide, 9-{(R)-2-[((R,S)-{[(S)-1-(isopropoxycarbonyl)ethyl]amino} phenoxyphosphinyl) methoxy] propyl}adenine.

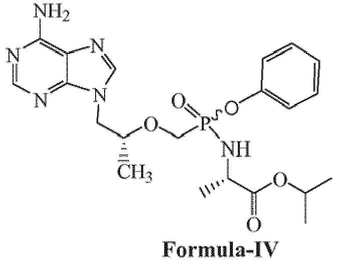

One embodiment of the present invention provides a process for the resolution of the enantiomers of Formula-IV using an achiral acid followed by desaltification of the acid salt

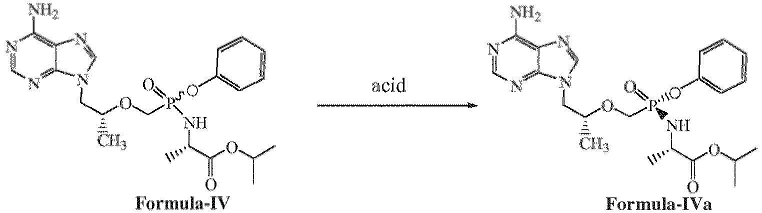

Another aspect of the present disclosure provides a process for the resolution of the enantiomers represented by Formula-III using chiral amines to give monophenyl tenofovir.

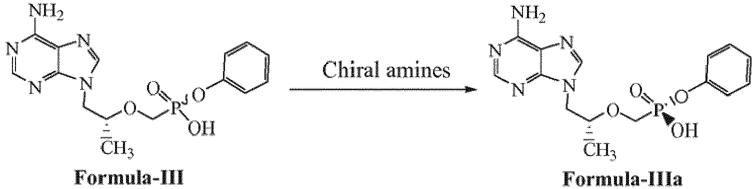

### BRIEF DESCRIPTION OF THE DRAWINGS

Further aspects of the present disclosure together with additional features contributing thereto and advantages accruing there from will be apparent from the following description of embodiments of the disclosure which are shown in the accompanying drawing figures wherein:

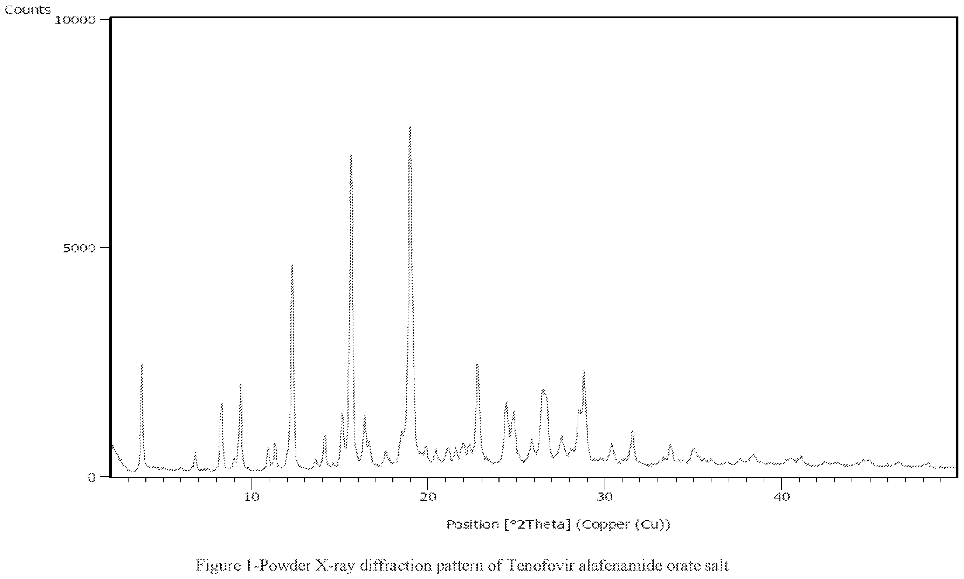

Figure 1 is an X-ray powder diffraction pattern of tenofovir alafenamide orate salt.

### DETAILED DESCRIPTION OF THE INVENTION

It is to be understood that the description of the present invention has been simplified to illustrate elements that are relevant for a clear understanding of the invention, while eliminating, for purposes of clarity, other elements that may be well known.

One aspect of the present disclosure is to provide a process for the enantiomeric purification Formula-IV using acids. Formula-IV may be reacted with a suitable acid in the presence of a suitable solvent to produce a corresponding acid salt of Formula-IV. Desaltification of the obtained acid salt of Formula-IV with a base gives tenofovir alafenamide of Formula-I.

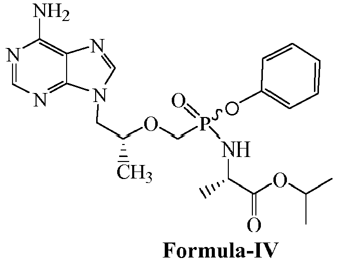

Within the context of the present invention, the acid is achiral. Examples of suitable achiral acids include orotic acid, fumaric acid, oxalic acid, maleic acid, benzoic acid, p-toluenesulphonic acid, succinic acid, orthophosphoric acid, and malonic acid. Examples of suitable solvents include ethyl acetate, acetone, acetonitrile, methanol, ethanol, n-propanol, 2-propanol, isopropyl acetate, methyl t-butyl ether, toluene, diisopropyl ether, hexane, THF, and mixtures thereof.

In some embodiments of the present invention, Formula-IV may exist as a mixture of two enantiomers, which are shown below as Formula-IVa and Formula-IVb. The compound represented by Formula-IVa is identical to the tenofovir alafenamide of Formula I.

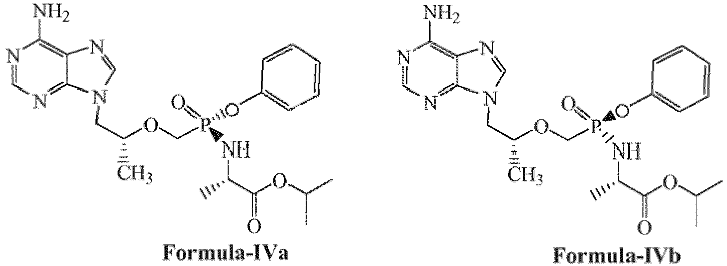

Within the context of the present invention, the percentage of Formula-IVa in the starting enantiomeric mixture of Formula IV may range from about 0% to about 99% prior to purification. In some embodiment of the invention, the percentage of Formula-IVa in the starting enantiomeric mixture ranges from above 0% to about 20%. In other embodiments, the percentage of Formula-IVa in the starting enantiomeric mixture ranges from about 20% to about 99%. In yet other embodiments, the percentage of Formula-IVa in the starting enantiomeric mixture ranges from about 50% to about 99%. In some embodiments, Formula-I, which may be purified from Formula-IV, contains less than 1% of enantiomeric impurities. In some particular embodiments, the purified Formula-I is substantially free of any detectable enantiomeric impurities.

Tenofovir alafenamide salts of the present invention may be characterized by their X-ray powder diffraction patterns. X-ray diffraction patterns were measured on a BRUKER D-8 Discover powder diffractometer equipped with a goniometer of θ/2θ configuration and Lynx Eye detector. The Cu-anode X-ray tube was operated at 40 kV and 30 mA. The experiments were conducted over the 2θ range of 2.0°-50.0°, 0.030° step size and 0.4 seconds step time.

One aspect of the present invention provides the orate salt of tenofovir alafenamide. The tenofovir alafenamide orate salt may be characterized by a powder X-ray diffraction pattern having significant peaks at 2θ values of 3.7, 9.3, 12.3, 15.6, 18.9, 22.8 and 28.8 ± 0.2°.

The tenofovir alafenamide orate salt may be further characterized by a powder X-ray diffraction pattern as depicted in Figure 1.

Another aspect of the present disclosure is to provide methods for the crystallization of Formula-IV using a suitable solvents to give substantially pure tenofovir alafenamide of Formula-I.

Within the context of the present invention, suitable solvents may be, for example, ethyl acetate, acetone, dimethyl formamide, toluene, isopropyl ether, methyl tertiary butyl ether, water, alcoholic solvents, or mixtures thereof. Examples of suitable alcoholic solvents include methanol, ethanol, isopropanol, and mixtures thereof.

The present disclosure further provides a process for the resolution of monophenyl tenofovir from a mixture of enantiomers depicted by Formula-III using chiral amines.

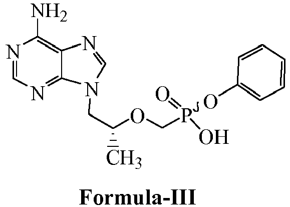

Within the context of the present disclosure, the chiral amine may be, for example, (R)-(+)-1-phenylethylamine, (S)-(-)-1-phenylethylamine, (R)-(+)-1-(1-naphthyl)ethyl amine, or (S)-(-)-1-(1-naphthyl)ethyl amine.

According to the present disclosure, Formula-III may be dissolved in suitable solvent such as acetonitrile, acetone, ethyl acetate, chloroform, N-methyl pyrrolidone and dimethyl formamide. A chiral amine may then be added and the mixture stirred. Examples of suitable chiral amines include R-(+)-1-phenylethylamine and (S)-(-)-1-phenylethylamine. The reaction mass may then be cooled and filtered. The obtained material may then be dried to get the R-(+)-1-phenylethylamine salt or (S)-(-)-1-phenylethylamine salt of Formula-III. The obtained salt may then be treated with an acid to get a substantially pure compound of Formula-III. Examples of suitable acids include aqueous HCl, acetic acid, p-toluene sulfonic acid and benzoic acid

In some embodiments, monophenyl tenofovir may then be further converted into tenofovir alafenamide or pharmaceutically acceptable salts thereof.

In view of the above description and the examples below, one of ordinary skill in the art will be able to practice the invention as claimed without undue experimentation. The foregoing will be better understood with reference to the following examples that detail certain procedures for the preparation of molecules, compositions and formulations according to the present invention. All references made to these examples are for the purposes of illustration. The following examples should not be considered exhaustive, but merely illustrative of only a few of the many aspects and embodiments contemplated by the present disclosure.

### EXAMPLES

### Example 1: Process for the preparation of L-alanine isopropyl ester hydrochloride.

L-alanine (100 g) and isopropyl alcohol (600 g) were combined in a round bottom flask and stirred for 10 to 15 minutes. Trimethylsilyl chloride (243.8 g) was then added and stirring continued for 15 minutes. The reaction mass temperature was raised to 74 ± 3 °C and maintained for 4-6 hours. The reaction progress was monitored by HPLC. After completion, isopropyl alcohol was distilled out under vacuum and then cooled to 42 ± 3 °C. Methyl tert-butyl ether (500 ml) was then added and stirred for 30 minutes. The reaction mass was cooled to room temperature, then crystallized. The product was filtered under nitrogen atmosphere, washed with methyl tert-butyl ether (200 ml) and dried under vacuum to get L-alanine isopropyl ester hydrochloride.

### Example 2: Process for the preparation of monophenyl PMPA hydrate

Cyclohexane (800 ml), triethylamine (66 g), and PMPA hydrate (100 g) were combined in a clean flask and the temperature was raised to reflux. The reaction mass was maintained at reflux temperature under atmospheric pressure, distilling out cyclohexane, until an azeotrope was formed. N-methyl-2-pyrrolidinone (100 ml), dimethylaminopyridine (44 g), and triethylamine (66 g) were then added. Next, triphenylphosphite (163 g) was slowly added and the temperature was raised to 80 ± 3 °C. The reaction conditions were maintained for 40 hours and monitored for completion by HPLC. The reaction mass was then cooled to room temperature. Methylene dichloride (200 ml) was then added and stirred for 30 minutes before cooling to 8 ± 2 °C. Water was added (400 ml) and stirred for 10 min. The temperature was slowly raised to 25 ± 3 ° C, stirred for 30 minutes, then the mixture was allowed to settle. The bottom organic layer was then separated. Methylene dichloride (200 ml) was added to the aqueous layer, stirred for 30 minutes, and the mixture was allowed to settle again before separating the bottom organic layer. This process was repeated once again, adding methylene dichloride (200 ml), allowing the reaction to settle, and then separating the organic layer. The pH of the aqueous layer was then adjusted to 2.25 ± 0.25 with chemically pure HCl. The product was filtered, washed with chilled water followed by acetone and dried to yield monophenyl PMPA hydrate.

### Example 3: Resolution of monophenyl PMPA hydrate

Monophenyl PMPA (25 g) and acetonitrile (250 ml) were combined and the temperature was raised 60 °C. R(+)-1-phenylethylamine was then added and the reaction mixture was stirred. The reaction mass was then cooled to room temperature and the product was filtered. The obtained material was dried to get a R(+)-1-phenylethylamine salt of monophenyl PMPA hydrate. The obtained salt was treated with chemically pure HCl (5 %) in water to get pure monophenyl PMPA hydrate.

### Example 4: Resolution of monophenyl PMPA hydrate

Monophenyl PMPA (25 g) and acetonitrile (250 ml) were combined and the temperature was raised to 60 °C. (S)-(-)-1-phenylethylamine was then added and the mixture was stirred. The reaction mass was cooled to room temperature and product was filtered. The obtained material was dried to get the (S)-(-)-1-phenylethylamine salt of monophenyl PMPA hydrate. The obtained salt was treated with chemically pure HCl (5 %) in water to get pure monophenyl PMPA hydrate.

### Example 5: Process for the preparation of tenofovir a la fenamide

Cyclohexane (1000 ml) and monophenyl PMPA hydrate (100 g) were mixed a clean flask and the temperature of the reaction mass was raised to reflux. The reaction mass was maintained at reflux temperature under atmospheric pressure, distilling out cyclohexane, until an azeotrope was formed. The mixture was then cooled to room temperature. A mixture of toluene (600 ml), acetonitrile (150 ml), dimethyl formamide (1 ml), and thionylchloride (42.16 g) was added and the reaction stirred for 15 minutes. The reaction mass temperature was then raised to 70 ± 3 °C. The reaction mass was maintained at 70 ± 3 °C for 26 hours and monitored for reaction completion by HPLC. Toluene and acetonitrile were distilled out under vacuum, keeping the temperature below 70 °C, and the reaction mixture was then cooled to room temperature. Methylene dichloride (1000 ml) and trimethylsilyl chloride (9.12 g) were then added. In a second flask, methylene dichloride (1000 ml) and L-alanine isopropyl ester hydrochloride (131.8 g) were mixed at room temperature. Trimethylsilyl chloride (9.12 g) was then added and the reaction conditions maintained for 60 minutes before cooling to 3 ± 2 °C. Triethylamine (106.2 g) was then added and reaction conditions maintained for 60 minutes before again cooling to -25 ± 3 ° C. The mixture in the first reaction flask was then added to the mixture in the second reaction flask slowly at -25 ± 3 °C for 180 minutes, then stirring for 120 minutes before raising the mixture to room temperature. Water was then added and the aqueous and organic layers were separated. The organic layer was washed with a sodium dihydrogen orthophosphate solution (10%) and layers were again separated. The organic layer was then washed with potassium bicarbonate solution (10%) and layers were separated. The organic layer was then washed with sodium chloride solution (10%) and separated again. The organic layer was then dried with sodium sulphate for up to 60 minutes. The solution was then filtered to remove the sodium the sodium sulphate and the solution was washed with methylene dichloride (50 ml). The organic layer was then concentrated under vacuum to get a thick residue. A mixture of acetonitrile (150 ml) and toluene (150 ml) was then added at 45 °C and the temperature was raised 60 ± 5 °C, where it was maintained for 30 minutes. The temperature of the reaction mass was then slowly cooled to room temperature. The product was filtered, washed with mixture of acetonitrile (25 ml) and toluene (25 ml) and dried to get tenofovir alafenamide freebase. This tenofovir alafenamide freebase had a purity of 97.70% and an unwanted diastereomeric impurity of 1.50%.

### Example 6: Purification of tenofovir alafenamide (reference)

Formula-IV (2 g) and (L)-(+)-tartaric acid (0.56 g) were combined in a flask and acetonitrile (1000 ml) was added. The reaction mass temperature was raised to reflux and stirred. The reaction mass was then slowly cooled to room temperature. The reaction mass was filtered, washed with acetonitrile, and dried to get the (L)-(+)-tartaric acid salt of tenofovir alafenamide with a purity of 98.97% and a unwanted diastereomeric impurity of 0.58%.

### Example 7: Purification of tenofovir alafenamide (reference)

Formula-IV (2 g) and (D)-(-)-tartaric acid (0.56 g) were mixed in a flask and acetonitrile (1000 ml) was added. The reaction mass temperature was raised to reflux and stirred. The reaction mass was slowly cooled to room temperature. The reaction mass was filtered, washed with acetonitrile, and dried to get the (D)-(-)-tartaric acid salt of tenofovir alafenamide with a purity of 98.04% and an unwanted diastereomeric impurity of 1.33%.

### Example 8: Purification of Tenofovir alafenamide (reference)

Formula-IV (2 g), (1S)-(+)-10-camphor sulfonic acid (0.87 g), ethyl acetate (12 ml), and acetone (1 ml) were mixed in a flask, heated to a temperature of 60 °C, and stirred. The reaction mass was slowly cooled to room temperature. The reaction mass was filtered, washed with ethyl acetate, and dried to get the (1S)-(+)-10-camphor sulfonic acid salt of tenofovir alafenamide with a purity of 97.79% and an unwanted diastereomeric impurity of 0.89%.

### Example 9: Purification of tenofovir alafenamide (reference)

Formula-IV (2 g), (1R)-(-)-10-camphor sulfonic acid (0.87 g), methyl t-butyl ether (20 ml), and acetone (10 ml) were combined in a flask and heated to a temperature of 60 °C and stirred. The reaction mass was slowly cooled to room temperature. The reaction mass was filtered, washed with methyl t-butyl ether, and dried to get the (1R)-(-)-10-camphor sulfonic acid salt of tenofovir alafenamide with a purity of 98.78% and an unwanted diastereomeric impurity of 0.08%.

### Example 10: Purification of tenofovir alafenamide (reference)

Formula-IV (2 g), (1*S*, 3R)-(-)-camphoric acid (0.75 g), and ethyl acetate (12 ml) were combined in a flask and heated to a temperature of 60°C and stirred. The reaction mass was slowly cooled to room temperature. The reaction mass was filtered, washed with ethyl acetate, and dried to get the (1*S*, 3R)-(-)-camphoric acid salt of tenofovir alafenamide with a purity of 98.94% and an unwanted diastereomeric impurity of 0.08%.

### Example 11: Purification of tenofovir alafenamide (reference)

Formula-IV (2 g), (S)-(+)-mandelic acid (0.57 g), and ethyl acetate (15 ml) were combined in a flask and heated to a temperature of 60 °C and stirred. The reaction mass was slowly cooled to room temperature. The reaction mass was filtered, washed with ethyl acetate, and dried to get the (S)-(+)-mandelic acid salt of tenofovir alafenamide with a purity of 99.35% and an unwanted diastereomeric impurity of 0.35%.

### Example 12: Purification of tenofovir alafenamide (reference)

Formula-IV (2 g), (R)-(-)-mandelic acid (0.57 g), and ethyl acetate (20 ml) were combined in a flask and heated to a temperature of 60 °C and stirred. The reaction mass was slowly cooled to room temperature. The reaction mass was filtered, washed with ethyl acetate, and dried to get the (R)-(-)-mandelic acid salt of tenofovir alafenamide with an unwanted diastereomeric impurity of 0.19% and a purity of 99.49%.

### Example 13: Purification of Tenofovir alafenamide

Formula-IV (2 g), benzoic acid (0.46 g) and acetone (5 ml) were combined in a flask and heated to a temperature of 55 °C and stirred. The reaction mass was slowly cooled to room temperature. The reaction mass was filtered, washed with acetone, and dried to get the benzoate salt of tenofovir alafenamide with an unwanted diastereomeric impurity of 0.24% and a purity of 99.43%.

### Example 14: Purification of Tenofovir alafenamide (reference)

Formula-IV (2 g), L-malic acid (0.50 g) and ethyl acetate (7.5 ml) were combined in a flask, heated to a temperature of 65-70 °C, and stirred. The reaction mass was slowly cooled to room temperature. The reaction mass was filtered, washed with ethyl acetate, and dried to get the L-malic acid salt of tenofovir alafenamide with an unwanted diastereomeric impurity of 1.0% and a purity of 97.92%.

### Example 15: Purification of Tenofovir alafenamide

Formula-IV (2 g), succinic acid (0.45 g), ethyl acetate (10 ml), and acetone (10ml) were combined in a flask, heated to a temperature of 60-65 °C, and stirred. The reaction mass was slowly cooled to room temperature. The reaction mass was filtered, washed with ethyl acetate, and dried to get the succinic acid salt of tenofovir alafenamide with an unwanted diastereomeric impurity of 1.16% and a purity of 97.92%.

### Example 16: Purification of Tenofovir alafenamide

Formula-IV (2 g), oxalic acid (0.47 g) and methanol (50 ml) were combined in a flask, heated to a temperature of 60-65 °C, and stirred. The reaction mass was slowly cooled to room temperature. The reaction mass was filtered, washed with methanol, and dried to get the oxalate salt of tenofovir alafenamide with an unwanted diastereomeric impurity of 0.84% and a purity of 97.71%.

### Example 17: Purification of Tenofovir alafenamide

Formula-IV (2 g), orthophosphoric acid (0.35 g), and methanol (15 ml) were combined in a flask and stirred for dissolution. Acetone (15ml) was added and stirred for 30 minutes at room temperature. The reaction mass was filtered, washed with acetone, and dried to get the orthophosphate salt of tenofovir alafenamide with an unwanted diastereomeric impurity of 1.0% and a purity of 97.59%.

### Example 18: Purification of Tenofovir alafenamide

Formula-IV (2 g), maleic acid (0.5 g), and methanol (10ml) were combined in flask. The reaction mass temperature was raised to reflux and stirred. The solvent was distilled out under vacuum and ethyl acetate (25 ml) was added. The reaction mass was slowly cooled to 10 °C. The reaction mass was filtered, washed with acetonitrile, and dried to get tenofovir alafenamide maleate.

### Example 19: Process for the preparation of Tenofovir alafenamide Fumarate

Tenofovir alafenamide benzoate (10 g), methylene dichloride (60ml), and purified water (30 ml) were combined in a flask at room temperature. The reaction mass was cooled to 20 °C and the pH was adjusted to 4-4.5 with a sodium bicarbonate solution. The reaction mass was stirred and the organic and aqueous layers were separated. The organic layer was washed with water, stirred, and the layers were again separated. The organic layer was then dried with sodium sulphate and the methylene dichloride was distilled out completely under vacuum. A mixture of ethanol (35 ml) and fumaric acid (1.75 g) was added to the mixture and temperature was raised to 65 °C. The reaction mass was cooled to 5 °C. The reaction mass was filtered, washed with chilled ethanol, and dried to get tenofovir alafenamide fumarate.

### Example 20: Process for the preparation of Tenofovir alafenamide Fumarate

Tenofovir alafenamide freebase (2 g), fumaric acid (0.5 g), and methanol (10 ml) were combined in a flask. The reaction mass temperature was raised to reflux and stirred. The reaction mass was slowly cooled room temperature and then further cooled to 0 °C. The reaction mass was filtered, washed with acetonitrile, and dried to get tenofovir alafenamide fumarate.

### Example 21: Process for the preparation of Tenofovir alafenamide orotate salt

Formula-IV (2.5 g) was dissolved in a mixture of acetone (14 ml) and water (12.5 ml). Orotic acid/orotic acid monohydrate/orotic acid dihydrate (0.82 g) in a dimethyl sulfoxide (8 ml) solution was then added to this solution. The reaction mixture was stirred for 10-15 minutes and water (12.5 ml) was added. The reaction mass was stirred for 90 minutes. The product was filtered from the reaction mass, washed with acetone (12.5 ml), and dried under vacuum to get tenofovir alafenamide orotate salt.

## Claims

1. A process for the purification of tenofovir alafenamide of Formula-I, comprising the steps of: 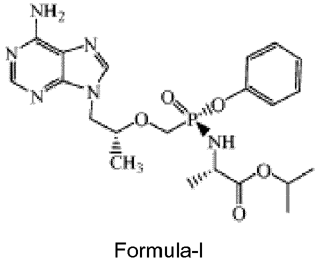
(a) reacting Formula-IV with an achiral acid to produce an acid salt; and 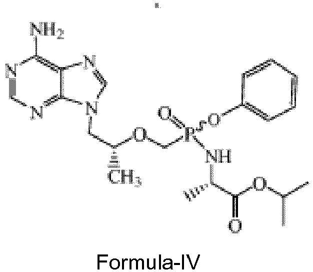
(b) desaltification of the acid salt to get tenofovir alafenamide of Formula-I.

2. The process according to claim 1, wherein the achiral acid is selected from the group consisting of orotic acid, fumaric acid, oxalic acid, maleic acid, benzoic acid, p-toluenesulphonic acid, succinic acid, orthophosphoric acid, and malonic acid.

3. The process according to claim 1, wherein the reacting step occurs in presence of a solvent.

4. The process according to claim 3, wherein the solvent is selected from the group consisting of ethyl acetate, acetone, acetonitrile, methanol, ethanol, n-propanol, 2- propanol, isopropyl acetate, methyl t-butyl ether, toluene, diisopropyl ether, hexane, THF, and mixtures thereof.

5. The process according to claim 1, wherein tenofovir alafenamide is further converted into a pharmaceutically acceptable salt of tenofovir alafenamide.

6. Tenofovir alafenamide orotate salt.

7. The compound of claim 6, which has a powder X-ray diffraction pattern having significant peaks at 2Θ values of 3.7, 9.3, 12.3, 15.6, 18.9, 22.8 and 28.8 ± 0.2°.

8. The compound according to claim 6 with a powder X-ray diffraction pattern shown in Figure 1.

## Patentansprüche

1. Verfahren für die Aufreinigung von Tenofoviralafenamid der Formel I, das die folgenden Schritte umfasst: 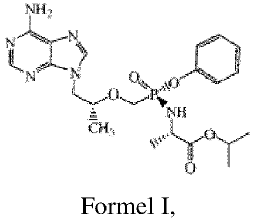
(a) Reaktion von Formel IV mit einer achiralen Säure, um ein Säuresalz zu erzeugen; und 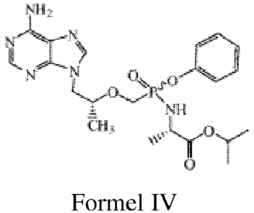
(b) Entsalzung des Säuresalzes, um Tenofoviralafenamid der Formel I zu erhalten.

2. Verfahren nach Anspruch 1, wobei die achirale Säure aus der Gruppe ausgewählt ist, die aus Folgenden besteht: Orotsäure, Fumarsäure, Oxalsäure, Maleinsäure, Benzoesäure, p-Toluolsulfonsäure, Bernsteinsäure, Orthophosphorsäure und Malonsäure.

3. Verfahren nach Anspruch 1, wobei der Reaktionsschritt in Gegenwart eines Lösungsmittels auftritt.

4. Verfahren nach Anspruch 3, wobei das Lösungsmittel aus der Gruppe ausgewählt ist, die aus Folgenden besteht: Ethylacetat, Aceton, Acetonitril, Methanol, Ethanol, n-Propanol, 2-Propanol, Isopropylacetat, Methyl-t-butylether, Toluol, Diisopropylether, Hexan, THF und Mischungen davon.

5. Verfahren nach Anspruch 1, wobei Tenofoviralafenamid weiter in ein pharmazeutisch verträgliches Salz von Tenofoviralafenamid umgewandelt wird.

6. Tenofoviralafenamidorotat-Salz.

7. Verbindung nach Anspruch 6, die ein Pulver-Röntgendiffraktionsmuster aufweist, das signifikante Peaks bei 2θ-Werten von 3,7, 9,3, 12,3, 15,6, 18,9, 22,8 und 28,8 ± 0,2° aufweist.

8. Verbindung nach Anspruch 6 mit einem Pulver-Röntgendiffraktionsmuster, wie es in Abbildung 1 gezeigt ist.

## Revendications

1. Procédé de purification de ténofovir alafénamide de Formule I, comprenant les étapes de 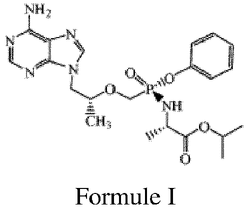
(a) réaction de la Formule IV avec un acide achiral afin de produire un sel d'acide ; et 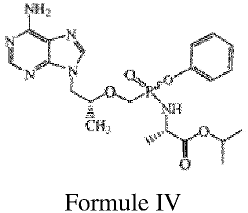
(b) désalinisation du sel d'acide afin d'obtenir le ténofovir alafénamide de Formule I.

2. Procédé selon la revendication 1, dans lequel l'acide achiral est choisi dans le groupe constitué par l'acide orotique, l'acide fumarique, l'acide oxalique, l'acide maléique, l'acide benzoïque, l'acide p-toluènesulfonique, l'acide succinique, l'acide orthophosphorique, et l'acide malonique.

3. Procédé selon la revendication 1, dans lequel l'étape de réaction a lieu en présence d'un solvant.

4. Procédé selon la revendication 3, dans lequel le solvant est choisi dans le groupe constitué par l'acétate d'éthyle, l'acétone, l'acétonitrile, le méthanol, l'éthanol, le n-propanol, le 2-propanol, l'acétate d'isopropyle, le méthyl-t-butyléther, le toluène, le diisopropyléther, l'hexane, le THF, et des mélanges de ceux-ci.

5. Procédé selon la revendication 1, dans lequel le ténofovir alafénamide est en outre converti en un sel pharmaceutiquement acceptable de ténofovir alafénamide.

6. Sel d'orotate de ténofovir alafénamide.

7. Composé selon la revendication 6, qui possède un diagramme de diffraction des rayons X sur poudre ayant des pics significatifs à des valeurs 2θ de 3,7, 9,3, 12,3, 15,6, 18,9, 22,8 et 28,8 ± 0,2°.

8. Composé selon la revendication 6, qui possède un diagramme de diffraction des rayons X sur poudre illustré à la Figure 1.
